# Europäisches Patentamt

(19) **European Patent Office**

Office européen des brevets

(11) Publication number: **0 103 199**
**B1**

(12) # EUROPEAN PATENT SPECIFICATION

(45) Date of publication of patent specification: **09.03.88**

(21) Application number: **83108086.6**

(22) Date of filing: **16.08.83**

(51) Int. Cl.⁴: $C\ 08\ F\ 220/18$, $C\ 09\ D\ 3/81$ //
$(C08F220/18, 220:20, 246:00)$

(54) **Humidity resistant coatings employing branched polymers of t-butyl acrylate.**

(30) Priority: **17.08.82 US 408916**

(43) Date of publication of application:
**21.03.84 Bulletin 84/12**

(45) Publication of the grant of the patent:
**09.03.88 Bulletin 88/10**

(84) Designated Contracting States:
**AT BE CH DE FR GB IT LI LU NL SE**

(56) References cited:
**EP-A-0 103 146**
**GB-A-1 556 464**
**US-A-3 983 297**

(73) Proprietor: **UNION CARBIDE CORPORATION**
**39 Old Ridgebury Road**
**Danbury Connecticut 06817 (US)**

(72) Inventor: **Sherwin, Maynard Arthur**
**563 Edgehill Drive**
**St. Albans West Virginia 25177 (US)**
Inventor: **Koleske, Joseph Victor**
**1513 Brentwood Road**
**Charleston West Virginia 25314 (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

The file contains technical information
submitted after the application was filed and
not included in this specification

Courier Press, Leamington Spa, England.

# 0 103 199

**Description**

Background of the invention

Many coatings are used on surfaces which are employed in an outdoor environment. Such coatings are exposed to sunlight, moisture and the like under a variety of temperature conditions and must, therefore, be able to withstand such changes in climate. Among the preferred weatherable coatings are those based on acrylic polymers. However, after long exposures of time, even these coatings will suffer deterioration at a pace which is dependent upon the geographical area involved.

As a result, several additives have been incorporated into coating formulations to slow down the degradative process by protecting against hydrolytic attack. However, incorporation of such additives increases the cost of producing weatherable coatings. Thus, it would be desirable to produce a highly weatherable coating which did not require the presence of such expensive additives.

In addition, many of the weatherable coatings heretofore employed utilized relatively large amounts of volatile organic solvents. With the rising price of energy, as well as the increased appreciation of the deleterious effects of organic solvents on the environment, it would be desirable to produce a weatherable coating which employs only a minimal amount of volatile organic solvent.

Among the compositions which have been developed in response to such need for highly weatherable coatings are those disclosed in GB—A—1,556,456, and 1,556,464 which contain copolymers consisting of 50—75 weight percent t-butyl acrylate; 5—30 weight percent styrene, vinyltoluene or methyl methacrylate; and 4—20 weight percent of acrylonitrile. However, these copolymers, which are cured by crosslinking with an aliphatic dicarboxylic acid, possess high glass transition temperatures as they have a Durran softening point of 90—120°C. Thus, as is apparent to one skilled in the art, these coatings must be applied as either (1) powders or (2) low-solids solutions as high-solids coatings containing such polymers would be too highly viscous to be utile. Therefore coatings employing these polymers are comparatively uneconomical as the use of powders would necessitate the formation of relatively thick coatings (of at least about 1.5 mil) whereas a low solids solution would require the use of relatively large amounts of solvent.

The not prepublished EP—A1—0103 146 discloses a copolymer comprising 10 to 90 weight percent t-butyl acrylate units; and 30 to 1 weight of units derived from a functional comonomer containing at least one active crosslinking site; and optionally up to 85 weight percent of units derived from other ethylenically unsaturated monomers, which were capable of polymerizing with t-butyl acrylate. Said copolymers can be used in coating compositions for outdoor application.

It has now been surprisingly found that coating compositions which contain low molecular weight copolymers comprised of special polyfunctional acrylates and t-butyl acrylate possess unexpectedly superior humidity resistance vis-a-vis coating compositions which do not contain copolymers possessing both of these monomers. Moreover, because of the low molecular weight of the copolymers of this invention, these coating compositions may be formulated in a high solids solution form.

Description of the invention

This invention is directed to copolymers and coating compositions contains such copolymers which possess enhanced humidity resistance and thus exhibit desirable weathering properties.

These coating compositions are made up of copolymers comprised of:

(a) from 10 to 95 weight percent, preferably from 25 to 75 weight percent, most preferably from 30 to 60 weight percent, of t-butyl acrylate units;

(b) from 0.1 to 3 weight percent, preferably from 0.5 to 2 weight percent, of trimethylolpropane triacrylate units

(c) from 1 to 30 weight percent, preferably from 5 to 20 weight percent of units of functional comonomers containing at least one active crosslinking site, and

(d) from 0 to 80 weight percent, preferably from 5 to 60 weight percent of units of other ethylenically unsaturated monomers which were capable of polymerizing with t-butyl acrylate and polyfunctional acrylates.

The term active crosslinking site refers to a location on the comonomer which is capable of reacting with the crosslinker selected such that a crosslink is produced Among the preferred active site containing comonomers which may be employed are those which, when reacted with t-butyl acrylate and a polyfunctional acrylate will produce a copolymer possessing active carboxyl, hydroxyl, or amide groups, or mixtures thereof.

Illustrative of such carboxyl group producing monomers are α,β-unsaturated carboxylic acids such as, for example, acrylic acid, methacrylic acid, α-chloroacrylic acid, itaconic acid, crotonic acid, aconitic acid, maleic acid and fumeric acid. Half acid esters of the dicarboxylic acids can also be used, such as methyl hydrogen itaconate, butyl hydrogen itaconate, and hydrogen maleate. Mixtures of these acids can also be used. The preferred carboxyl group producing monomers are acrylic acid and methylacrylic acid.

Illustrative of active hydroxyl group producing monomers are mono- and polyhydroxy alkyl esters of acrylic acid and methacrylic acid such as 2-hydroxyethyl acrylate and methacrylate, 2-hydroxypropyl acrylate and methacrylate, 3-hydroxypropyl acrylate and methacrylate, 2-hydroxybutyl acrylate and methacrylate, 3-hydroxybutyl acrylate and methacrylate, 4-hydroxybutyl acrylate and methacrylate, 5-hydroxyamyl acrylate and methacrylate, 6-hydroxyhexyl acrylate and methacrylate, 8-hydroxyoctyl

2

acrylate and methacrylate, 2,3-dihydroxypropyl acrylate and methacrylate, 2,3-dihydroxybutyl acrylate and methacrylate.

Mixtures of these hydroxyalkyl esters can also be used. The preferred hydroxyalkyl esters are hydroxyethyl acrylate, hydroxyethyl methacrylate, hydroxypropyl acrylate, and hydroxypropyl methacrylate.

Illustrative of active amide group producing monomers are monomers such as acrylamide and methacrylamide.

Illustrative of other ethylenically unsaturated monomers which are capable of polymerizing with t-butyl acrylate and polyfunctional acrylates, and which may be incorporated into the copolymer are acrylic esters and methacrylic esters such as methyl acrylate, ethyl acrylate, propyl acrylate, isopropyl acrylate, butyl acrylate, isobutyl acrylate, sec-butyl acrylate, n-amyl acrylate, isoamyl acrylate, hexyl acrylate, 2-ethylhexyl acrylate, octyl acrylate, 3,5,5-trimethylhexyl acrylate, decyl acrylate, dodecyl acrylate, hexadecyl acrylate, octadecyl acrylate, octadecenyl acrylate, n-amyl methacrylate, sec-amyl methacrylate, hexyl methacrylate, 2-ethylbutyl methacrylate, octyl methacrylate, 3,5,5-trimethylhexyl methacrylate, decyl methacrylate, dodecyl methacrylate, hexadecyl methacrylate, octadecyl methacrylate, butoxyethyl acrylate or methacrylate or other alkoxyethyl acrylate or methacrylate, methyl methacrylate, ethyl methacrylate, propyl methacrylate, isopropyl methacrylate, butyl methacrylate, sec-butyl methacrylate, and t-butyl methacrylate, t-amyl methacrylate, t-amyl acrylate, cyclohexyl acrylate or methacrylate, as well as other $\alpha,\beta$-ethylenically unsaturated monomers, such as ethylene, butadiene, vinyl chloride, vinylidene chloride, vinyl acetate, acrylonitrile, and methacrylonitrile, in order to achieve desired effects.

The polymers should be produced such that they possess a glass transition temperature of less than 50°C and an average molecular weight of from 1,000 to 20,000, preferably of from 3,000 to 15,000.

Typically, the copolymers employed in the compositions of the instant invention are prepared by reacting a monomer feed mix (containing t-butyl acrylate, a polyfunctional acrylate, a comonomer having at least one active crosslinking site, and optionally other ethylenically unsaturated monomers) with a catalyst feed mixture at an elevated temperature.

The polymers of this invention may be prepared by any standard polymerization process including free radial, and anionic. However, a telomerization process wherein a monomer which is a chain transfer agent such as a mercaptan is incorporated into the copolymer is preferred. Illustrative of the mercaptan chain-transfer agents which may be employed are butyl mercaptan, mercaptoacetic acid, mercaptoethanol, 3-mercapto-1,2-propanediol and 2-methyl-2-propanethiol, t-dodecyl mercaptan, phenyl mercaptan, pentaerythritol tetramercaptopropionate, octyldecyl mercaptan, and tetradecyl mercaptan.

The catalyst employed is typically a free radical initiator or a redox catalyst. One can mention, as merely illustrative of suitable catalysts which can be employed, frer radicals initiators such as hydrogen peroxide, peracetic acid, t-butyl hydroperoxide, di-t-butyl peroxide, dibenzoyl peroxide, benzoyl hydroperoxide, 2,4-dichlorobenzoyl peroxide, 2,5-dimethyl-2,5-bis(hydroperoxy)hexane, perbenzoic acid, t-butyl peroxypivalate, t-butyl peracetate, azo-bis-isobutyronitrile, ammonium persulfate, potassium persulfate, sodium perphosphate, potassium perphosphate, isopropyl peroxycarbonate, and 2,2'-azobis(2,4-dimethylvaleronitrile); and redox catalyst systems such as sodium persulfate-sodium formaldehyde sulfoxylate, cumene hydroperoxide-sodium metabisulfite, hydrogen peroxide-ascorbic acid, and sulfur dioxide-ammonium persulphate.

The catalysts are employed in the usual catalytically effective concentrations which are known to those skilled in the art of emulsion polymerization.

The polymerization is typically carried out in the presence of an organic solvent which will not interfere with the polymerization reaction. Illustrative of the solvents which may be employed are ethoxyethyl acetate, methylene chloride, ethanol, iso-propanol, n-propanol, n-butanol, iso-butanol, tertbutanol; the methyl, ethyl, propyl or butyl esters of acetic acid, acetone, methyl ethyl ketone, benzene, and toluene.

The reaction may be carried out at a temperature of from 50°C to 150°C, with a preferred temperature of from 90°C to 130°C. The reaction may be performed at sub- or superatmospheric pressures, with atmospheric pressure being preferred.

Reaction time is not critical and may vary from less than several hours to several days or more depending upon the reaction batch size, pressure, temperature, etc. selected.

The coating compositions of this invention comprise mixtures of (1) the t-butyl acrylate/polyfunctional acrylate/functional monomer/(optionally other ethylenically unsaturated monomers) copolymer of the instant invention, (2) a suitable crosslinker and (3) suitable additives that are known to one skilled in the art of coating formulations. Illustrative of such additives are pigments and fillers, such as titanium dioxide, flow and levelling aids such as silicone surfactants, and fluorocarbon based surfactants and pigment dispersants. These coating compositions may be blended by means well known to one skilled in the art. The compositions of this invention may be formulated into high solids coatings, i.e., as much as 75 weight percent or higher, although this figure may vary in accordance with the solvent selected, the viscosity desired, application temperature, etc.

The crosslinkers which may be employed will vary with the type of functional crosslinking sites on the copolymer employed. Thus, for copolymers containing active hydroxyl groups crosslinkers including polyepoxides (such as cycloaliphatic epoxides and diglycidyl epoxides), polyfunctional isocyanates, etherated amino-formaldehyde resins, and mixtures thereof may be employed. For copolymers containing

3

active carboxyl groups crosslinkers including polyepoxides (such as cycloaliphatic epoxides and diglycidyl epoxides), aziridines, carbodiimides, etherated amino-formaldehyde resins, and mixtures thereof may be employed. For copolymers containing active amide groups, crosslinkers including polyfunctional isocyanates, polyepoxides (such as cycloaliphatic epoxides and diglycidyl epoxides), etherated amino-formaldehyde resins, and mixtures thereof may be employed. For copolymers which contain mixtures of active hydroxyl, carboxyl and/or amide groups, mixtures of suitable crosslinkers may be utilized. Preferred crosslinkers include polyepoxides and etherated amino-formaldehyde resins, as these crosslinkers are reactive with active hydroxyl, carboxyl and amide groups.

Illustrative of the polyfunctional isocyanates which may be employed for copolymers containing active hydroxyl and/or amide sites are 3,5,5-trimethyl-1-isocyanato-3-isocyanatomethylcyclohexane, di(2-isocyanatoethyl)-bicyclo(2.2.1)-hept-5-ene-2,3-dicarboxylate, 2,4-tolylene diisocyanate, 2,6-tolylene diisocyanate, 4,4'-diphenylmethane diisocyanate, dianisidine diisocyanate, hexamethylene diisocyanate, the m- and p-xylylene diisocyanates, tetramethylene diisocyanate, dicyclohexyl-4,4'-methane diisocyanate, cyclohexane-1,4-diisocyanate, 1,5-naphthylene diisocyanate, 4,4'-diisocyanate diphenyl ether, 2,4,6-triisocyanate toluene, 4,4',4''-triisocyanate triphenyl methane, diphenylene-4,4-diisocyanate, and the polymethylene polyphenylisocyanates.

Illustrative of the polyepoxides which may be employed are the cycloaliphatic diepoxides which are described in U.S.—A—3,027,357, 2,890,194 (especially column 7, line 11 to column 7, line 38) and 2,890,197 including 3,4-epoxycyclohexylmethyl-3,4-epoxycyclohexane carboxylate, bis(3,4-epoxycyclohexylmethyl)-adipate, bis(2,3-epoxycyclopentyl)ether, vinyl cyclohexene dioxide, 2-(3,4-epoxycyclohexyl)-5,5-spiro-(2,3-epoxycyclohexane)-m-dioxane, bis(3,4 - epoxycyclohexylmethyl)adipate, endo- and exo-dicyclopentadiene diepoxide, and limonene diepoxide.

Illustrative of the amino-formaldehyde resins which are useful are hexakismethoxymethylmelamine, dimethylol ethylene urea, tetramethylol acetylene diurea, tris methoxymethylmelamine, various methyl, butyl, isobutyl ethers of melamineformaldehyde adducts, various methyl, butyl, isobutyl ethers of benzoguanamine-formaldehyde.

In general, the amount of crosslinker which should be employed will be dependent on the equivalent weight of the crosslinker used, the inherent flexibility of the crosslinker used, the reactivity of the crosslinker with itself, and the degree of hardness/softness of flexibility desired in the final coating. These amounts will vary with particular functional monomer and crosslinker combination selected and will be known to one skilled in the art.

The catalyst employed in the crosslinking reaction, if indeed a catalyst is required for the given active site/crosslinker combination, will vary in accordance with the particular active site/crosslinker combination selected. The amounts and types of catalysts necessary will be well known to one skilled in the art. Thus, for example, with aminoplast crosslinkers catalysts such as p-toluene sulfuric acid, naphthalene sulfonic acid, phosphoric acid, dinonyl naphthalene disulfonic acid, or the stannous salt of trifluoromethane sulfuric can be used. With cycloaliphatic epoxides catalysts such as stannous octanoate, dibutyltin dilaurate, triflic acid, the reaction product of triflic acid and stannous oxide, and diethyl ammonium triflate can be used.

The compositions of the instant invention may be used on surfaces for which acrylate-base coatings are suitable. They are especially suited for outdoor use as such use will best take advantage of their enhanced humidity resistance.

Examples

The following examples are intended to further illustrate the invention.

In the Comparative Experiments, Examples, and Table below the following abbreviations have been employed:

| | |
|---|---|
| STY.=styrene | HEA=hydroxyethyl acrylate |
| BA=n-butyl acrylate | MMA=methyl methacrylate |
| t-BA=t-butyl acrylate | EA=ethylacrylate |
| i-PA=isopropyl acrylate | TMPTA=trimethylol propane triacrylate |

Comparative experiment A

A cotelomer of t-butyl acrylate/ethyl acrylate/2-hydroxyethyl acrylate was prepared as follows. The cotelormerization was carried out in a 2-liter resin kettle equipped with a stirrer, reflux condenser, temperature controller, separate monomer and catalyst feed lines, and a sampling tube. A continuous feed process was used.

| Initial charge | | | Monomer feed | | |
|---|---|---|---|---|---|
| Ethoxyethylacetate | 44 g | | t-Butylacrylate | 360 g | |
| | | | Ethyl acrylate | 165 g | |
| Catalyst feed | | | 2-hydroxyethylacrylate | 75 g | |
| VAZO-52* | 10 g | | Ethoxyethyl acetate | 43 g | |
| Ethoxyethylacetate | 113 g | | t-dodecylmercaptan | 18 g | |

*VAZO-52=2,2'-azobis (2,4-dimethylvaleronitrile)

The ethoxyethyl acetate was charged to the kettle and heated to 115°C. The catalyst feed was started 5 minutes prior to the monomer feed. Both were fed over a 3 hour period with the temperature at 112—122°C. The vehicle was cooled to 77°C and dumped to give a slightly hazy, light amber colored residue product. Analysis of this residue product indicated that the solution contained 77.1% of the cotelomer. The solution of cotelomer had a Ubbelohde viscosity of 2951 mm²/s at 30°C and a glass transition temperature of 10°C as measured by a differential scanning calorimeter. In order to test the effect of high humidity upon the stress-strain properties of the cotelomer produced, plaques containing such cotelomers were made as follows:

The residue product from Comparative Experiment A was filtered and blended with a crosslinking resin. The mixture was poured into a Teflon lined mold to give a dry film thickness of 0,56—0,66 mm (22—26 mils)

| | |
|---|---|
| Comparative experiment A (72.1%) | 50 g |
| Cymel™ 325* | 15.45 g |
| | 65.45 g |

*A commercially available melamine formaldehyde resin, American Cyanamide

The plaques was dried at 60°C for 16 hours at atmospheric pressure and then at 60°C and 13,3 mbar (10 mm mercury) pressure for 16 hours. The solid was then heated in a lab oven for 45 minutes at 150°C. Dogbone shaped samples were cut from the plaque and were aged one week at 22°C and 55±2% relative humidity or at 22°C and 90±2% relative humidity. Tensile strength and percent elongation at break were determined using an Instron test machine at a 26.7% minute⁻¹ elongation rate. 2 to 4 duplicates were run under each test condition. The results of such testing are listed in Table I, below.

Example 1

A t-butyl acrylate/ethyl acrylate/hydroxyethyl acrylate/trimethylol propane triacrylate cotelomer was prepared using a procedure similar to that employed in Comparative Experiment A. The initial charge, monomer feed, and catalyst feeds were as follows:

| Initial charge | | Monomer feed | |
|---|---|---|---|
| Ethoxyethylacetate | 44 g | t-Butyl acrylate | 360 g |
| | | Ethyl acrylate | 165 g |
| Initial feed | | 2-hydroxyethylacrylate | 75 g |
| VAZO-52 | 10.g | trimethylolpropane | |
| Ethoxyethylacetate | 113 g | triacrylate | 6 g |
| | | t-dodecylmercaptan | 18 g |
| | | Ethoxyethyl acetate | 43 g |

Analysis of the residue product indicated that the solution produced contained 72.2 weight percent of the cotelomer. The solution of cotelomer had a Ubbelohde viscosity of 3807 mm²/s at 30°C, and a glass transition temperature of −6°C as measured by a differential scanning calorimeter. Plaques containing the cotelomer was prepared and tested in a manner similar to that described in Comparative Experiment A. The results of such testing are listed in Table I, below.

Example 2

A t-butyl acrylate/ethyl acrylate/hydroxyethyl acrylate/trimethylol propane triacrylate cotelomer was prepared using a procedure similar to that described in Comparative Experiment A. The initial charge, monomer feed, and catalyst feed were as follows:

| Initial charge | | Monomer feed | |
|---|---|---|---|
| Ethoxyethyl acetate | 44 g | t-Butyl acrylate | 360 g |
| | | Ethyl acrylate | 165 g |
| Catalyst feed | | 2-hydroxyethyl acrylate | 75 g |
| VAZO-52 | 10 g | Trimethylolpropane | 18 g |
| Ethoxyethyl acetate | 113 g | triacrylate | |
| | | t-Dodecyl mercaptan | 18 g |
| | | Ethoxyethyl acetate | 43 g |

Analysis of the residue product indicated that the solution contained 69.9% of the cotelomer. The solution of cotelomer had a Ubbelohde viscosity of 3971 mm²/s at 30°C and a glass transition temperature of −6°C as measured by a differential scanning calorimeter. Plaques containing the cotelomer were prepared and tested in a manner similar to that described in Comparative Experiment A. The results of such testing are listed in Table I, below.

TABLE I

| Example | System | Tensile strength, (psi) N/cm² | | Elongation at break, % | |
|---|---|---|---|---|---|
| | | @55% RH | @90% RH | @55% RH | @90% RH |
| A | t-BA/EA/HEA No TMPTA | (2951) 2036 | (2471) 1705 | 5.6 | 22.5 |
| 1 | t-BA/EA/HEA 1% TMPTA | (6776) 4678 | (7333) 5060 | 4.7 | 7.6 |
| 2 | t-BA/EA/HEA 3% TMPTA | (5419) 3739 | (3930) 2712 | 10.4 | 9.6 |

The above results indicate that coatings which contain polymers incorporating polyfunctional acrylates possess increased humidity resistance relative to coatings which contain copolymers not incorporating polyfunctional acrylates. This is demonstrated by the high strength which such coatings possess at high humidity, i.e. 90 percent humidity.

Comparative experiments B and C and Examples 3 and 4

Several cotelomers were prepared in a manner similar to that described in Comparative Experiment A. These cotelomers contained the following monomers in the weight percents listed below:

| Example | Monomers (wt. %) | |
|---|---|---|
| B | STY | 20.0% |
| | t-BA | 8.5% |
| | i-PA | 59.0% |
| | HEA | 12.5% |
| C | STY | 21.0% |
| | MMA | 18.0% |
| | EA | 39.9% |
| | BA | 8.0% |
| | HEA | 13.1% |
| 3 | STY | 19.9% |
| | t-BA | 8.5% |
| | i-PA | 58.7% |
| | HEA | 12.4% |
| | TMPTA | 0.5% |
| 4 | STY | 19.8% |
| | t-BA | 8.4% |
| | i-PA | 58.4% |
| | HEA | 12.4% |
| | TMPTA | 1% |

Plaques containing these cotelomers were prepared and tested in a manner similar to that described in Comparative Experiment A. The results of such testing are listed in Table II below:

## TABLE II

| Example | System | Tensile strength, (psi) N/cm² | | Elongation at break, % | |
|---|---|---|---|---|---|
| | | @55% RH | @90% RH | @55% RH | @90% RH |
| B | STY/t-BA/i-PA/HEA No TMPTA | (973) 671 | (1132) 781 | 20.2 | 36.6 |
| C | STY/MMA/EA/BA/HEA No TMPTA | (742) 512 | (702) 484 | 34.7 | 81.3 |
| 3 | STY/t-BA/i-PA/HEA 0.5% TMPTA | (1791) 1236 | (1000) 690 | 41.1 | 48.6 |
| 4 | STY/t-BA/i-PA/HEA 1% TMPTA | (6301) 4348 | (2129) 1469 | 37.3 | 15.4 |

The results in Table II indicate that humidity resistance is enhanced by the incorporation of t-butyl acrylate into the copolymers. The humidity resistance is further enhanced by the incorporation of a polyfunctional acrylate into the copolymer.

**Claims for the Contracting States: BE, CH, DE, FR, GB, IT, LI, LU, NL, SE**

1. A copolymer for coating compositions employed in an outdoor environment comprised of:
(a) from 10 to 95 weight percent of t-butyl acrylate units;
(c) from 1 to 30 weight percent of units of functional comonomers having contained at least one crosslinking site;
(d) from 0 to 80 weight percent of units of other ethylenically unsaturated monomers which were capable of polymerizing with t-butyl acrylate and polyfunctional acrylates characterized by an additional content of
(b) from 0.1 to 3 weight percent of trimethylolpropane triacrylate units.

2. The copolymer of claim 1 wherein t-butyl acrylate units are present in an amount of from 25 to 75 weight percent or from 30 to 60 weight percent.

3. The copolymer of claim 1 or 2 wherein the polyfunctional acrylate units are present in an amount of from 0.5 to 2 weight percent.

4. The copolymer of claim 1—3 wherein the functional comonomer units are present in an amount of from 5 to 20 weight percent.

5. The copolymer of claim 1—4 wherein the functional comonomer unit is one of acrylic acid, methacrylic acid, hydroxyethyl acrylate, hydroxyethyl methacrylate, hydroxypropyl acrylate, hydroxypropyl methacrylate and mixtures thereof.

6. The copolymer of claim 1 wherein other ethylenically unsaturated monomer units, component (d), are present in an amount of from 5 to 60 weight percent.

7. A coating composition comprised of:
(1) a copolymer according to claim 1—6 and
(2) a suitable crosslinker.

8. The coating composition of claim 7 wherein the crosslinker is a polyepoxide or an etherated amino-formaldehyde resin.

9. The coating composition of claim 8 wherein the polyepoxide is a cycloaliphatic epoxide or a diglycidyl epoxide.

**Claims for the Contracting State: AT**

1. A process for producing a copolymer comprised of:
(a) from 10 to 95 weight percent of t-butyl acrylate units;
(b) from 0.1 to 3 weight percent of units of a trimethylolpropane triacrylate;
(c) from 1 to 30 weight percent of units of functional comonomers having contained at least one crosslinking site;
(d) from 0 to 80 weight percent of units of other ethylenically unsaturated monomers which were capable of polymerizing with t-butyl acrylate a) and polyfunctional acrylates b) by reacting a monomer feed mix containing t-butyl acrylate, the polyfunctional acrylate, the comonomer having at least one active crosslinking site and optionally other ethylenically unsaturated monomers with a polymerisation catalyst at an elevated temperature.

2. The process of claim 1 for producing the copolymer wherein t-butyl acrylate units are present in an amount of from 25 to 75 weight percent or from 30 to 60 weight percent.

3. The process of claim 1—2 for producing the copolymer wherein the polyfunctional acrylate units are present in an amount from 0.5 to 2 weight percent.

4. The process of claim 1—3 for producing the copolymer wherein the functional comonomer units are present in an amount of from 5 to 20 weight percent.

5. The process of claim 1—4 for producing the copolymer wherein the functional comonomer unit is one of acrylic acid, methacrylic acid, hydroxyethyl acrylate, hydroxyethyl methacrylate, hydroxypropyl acrylate, hydroxypropyl methacrylate and mixtures thereof.

6. The process of claim 1—5 for producing the copolymer wherein other ethylenically unsaturated monomer units, component (d), are present in an amount of from 5 to 60 weight percent.

7. A coating composition comprised of:
(1) a copolymer according to claim 1—6 and
(2) a suitable crosslinker.

8. The coating composition of claim 7 wherein the crosslinker is a polyepoxide or an etherated amino-formaldehyde resin.

9. The coating composition of claim 8 wherein the polyepoxide is a cycloaliphatic epoxide or a diglycidyl epoxide.

**Patentansprüche fur die Vertagsstaaten: BE, CH, DE, FR, GB, IT, LI, LU, NL, SE**

1. Copolymer für Überzugsmassen für Außenanwendungen aus
(a) 10 bis 95 Gew.-% t-Butylacrylat-Einheiten;
(c) 1 bis 30 Gew.-% Einheiten funktionneller Comonomerer mit zumindest einer Vernetzungsstelle;
(d) 0 bis 80 Gew.-% von Einheiten anderer ethylenisch ungesättigter Monomerer, die mit t-Butylacrylat und den polyfunktionellen Acrylaten zu Polymerisieren vermögen, gekennzeichnet durch einen zusätzlichen Gehalt von
(b) 0,1 bis 3 Gew.-% von Trimethylolpropantriacrylat-Einheiten.

2. Copolymer nach Anspruch 1, worin die t-Butylacrylat-Einheiten in einer Menge von 25 bis 75 Gew.-% oder 30 bis 60 Gew.-% vorliegen.

3. Copolymer nach Anspruch 1 oder 2, worin die polyfunktionellen Acrylat-Einheiten in einer Menge von 0,5 bis 2 Gew.-% vorliegen.

4. Copolymer nach Anspruch 1 bis 3, worin die Einheiten der funktionellen Comonomeren in einer Menge von 5 bis 20 Gew.-% vorliegen.

5. Copolymer nach Anspruch 1 bis 4, worin die Einheiten der funktionellen Comonomeren solche von Acrylsäure, Methacrylsäure, Hydroxyethylacrylat, Hydroxyethylmethacrylat, Hydroxypropylacrylat, Hydroxypropylmethacrylat und deren Gemisch sind.

6. Copolymer nach Anspruch 1, worin die anderen ethylenisch ungesättigten Monomer-Einheiten-Komponente (d)-in einer Menge von 5 bis 60 Gew.-% vorhanden sind.

7. Überzugsmasse enthaltend:
(1) das Copolymere entsprechend Anspruch 1 bis 6 und
(2) ein Vernetzungsmittel.

8. Überzugsmasse nach Anspruch 7, worin das Vernetzungsmittel ein Polyepoxid oder ein verethertes Aminoformaldehyd-Harz ist.

9. Überzugsmasse nach Anspruch 8, worin das Polyepoxid ein cycloaliphatisches Epoxid oder ein Diglycidylepoxid ist.

**Patentansprüche für den Vertragsstaat: AT**

1. Verfahren zur Herstellung eines Copolymeren aus
(a) 10 bis 95 Gew.-% t-Butylacrylat-Einheiten;
(b) 0,1 bis 3 Gew.-% Einheiten eines Trimethylolpropantriacrylats;
(c) 1 bis 30 Gew.-% Einheiten funktioneller Comonomerer enthaltend zumindest eine Vernetzungsstelle;
(d) 0 bis 80 Gew.-% Einheiten anderer ethylenisch ungesättigter Monomerer, die mit t-Butylacrylat (a) und polyfunktionellen Acrylaten (b) zu Polymerisieren vermögen, durch Umsetzung eines monomeren Ausgangsgemischs enthaltend t-Butylacrylat, polyfunktionelles Acrylat, Comonomere mit zumindest einer aktiven Vernetzungsstelle und gegebenenfalls weitere ethylenisch ungesättigte Monomere mit einem Polymerisations-Katalysator bei erhöhter Temperatur.

2. Verfahren nach Anspruch 1 zur Herstellung eines Copolymeren, in dem die t-Butylacrylat-Einheiten in einer Menge von 25 bis 75 Gew.-% oder von 30 bis 60 Gew.-% vorhanden sind.

3. Verfahren nach Anspruch 1 oder 2 zur Herstellung eines Copolymeren, worin die Einheiten des polyfunktionellen Acrylats in einer Menge von 0,5 bis 2 Gew.-% vorhanden sind.

4. Verfahren nach Anspruch 1 bis 3 zur Herstellung eines Copolymeren, worin die Einheiten des funktionellen Comonomeren in einer Menge von 5 bis 20 Gew.-% vorhanden sind.

**0 103 199**

5. Verfahren nach Anspruch 1 bis 4 zur Herstellung eines Copolymeren, worin die Einheiten des funktionellen Comonomeren von Acrylsäure, Methyacrylsäure, Hydroxyethylacrylat, Hydroxyethylmethacrylat, Hydroxypropylacrylat, Hydroxypropylmethacrylat oder deren Gemische stammen.

6. Verfahren nach Anspruch 1 bis 5 zur Herstellung eines Copolymeren, worin die Einheiten der anderen ethylenisch ungesättigten Monomeren-Komponente (d)-in einer Menge von 5 bis 60 Gew.-% vorhanden sind.

7. Überzugsmasse enthaltend:

(1) das Copolymere entsprechend Anspruch 1 bis 6 und

(2) ein Vernetzungsmittel.

8. Überzugsmasse nach Anspruch 7, worin das Vernetzungsmittel ein Polyepoxid oder ein verethertes Aminoformaldehyd-Harz ist.

9. Überzugsmasse nach Anspruch 8, worin das Polyepoxid ein cycloaliphatisches Epoxid oder ein Diglycidylepoxid ist.


**Revendications pour les Etats Contractants: BE, CH, DE, FR, GB, IT, LI, LU, NL, SE**

1. Copolymère pour compositions de revêtement utilisées dans un environnement extérieur, formé:

(a) de 10 à 95 % en poids de motifs d'acrylate de tertiobutyle;

(c) de 1 à 30 % en poids de motifs de comonomères fonctionnels ayant contenu au moins un site de réticulation;

(d) de 0 à 80 % en poids de motifs d'autres monomères à non-saturation éthyénique susceptibles d'une polymérisation avec l'acrylate de tertiobutyle et des acrylates polyfonctionnels, caractérisé par une teneur additionnelle

(b) de 0,1 à 3 % en poids de motifs de triacrylate de triméthylolpropane.

2. Copolymère suivant la revendication 1, dans lequel les motifs d'acrylate de tertiobutyle sont présents en une quantité de 25 à 75 % en poids ou de 30 à 60 % en poids.

3. Copolymère suivant la revendication 1 ou 2, dans lequel les motifs d'acrylates polyfonctionnels sont présents en une quantité de 0,5 à 2 % en poids.

4. Copolymère suivant la revendication 1 à 3, dans lequel les motifs de comonomères fonctionnels sont présents en une quantité de 5 à 20 % en poids.

5. Copolymère suivant les revendications 1 à 4, dans lequel les motifs de comonomères fonctionnels est un motif de l'un des monomères acide acrylique, acidé méthacrylique, acrylate, d'hydroxyéthyle, méthacrylate d'hydroxyéthyle, acrylate d'hydroxypropyle, méthacrylate d'hydroxypropyle et leurs mélanges.

6. Copolymère suivant la revendication 1, dans lequel les autres motifs de monomères à non-saturation éthylénique représentant les composants (d) sont présents en une quantité de 5 à 60 % en poids.

7. Composition de revêtement, formée:

(1) d'un copolymère suivant les revendications 1 à 6 et

(2) d'un agent de réticulation convenable.

8. Composition de revêtement suivant la revendication 7, dans laquelle l'agent de réticulation est un polyépoxyde ou une résine amine-formaldéhyde à fonction éther.

9. Composition de revêtement suivant la revendication 8, dans laquelle le polyépoxyde est un èpoxyde cycloaliphatique ou un époxyde de diglycidyle.


**Revendications pour l'Etat Contractant: AT**

1. Procédé de production d'un copolymère formé:

(a) de 10 à 95 % en poids de motifs d'acrylate de tertiobutyle;

(b) de 0,1 à 3 % en poids de motifs d'un triacrylate de triméthylolpropane;

(c) de 1 à 30 % en poids de motifs de comonomères fonctionnels présentant au moins un site de réticulation;

(d) de 0 à 80 % en poids de motifs d'autres monomères à non-saturation éthylénique susceptibles de se polymériser avec l'acrylate de tertiobutyle a) et des acrylates polyfonctionnels b) par réaction d'une charge mixte de monomères contenant de l'acrylate de tertiobutyle, l'acrylate polyfonctionnel, le comonomère ayant au moins un site actif de réticulation et les cas échéant d'autres monomères à non-saturation éthylénique, avec un catalyseur de polymérisation à une température élevée.

2. Procédé suivant la revendication 1 pour la production du copolymère, dans lequel les motifs acrylate de tertiobutyle sont présents en une quantité de 25 à 75 % en poids ou de 30 à 60 % en poids.

3. Procédé suivant les revendications 1—2 pour la production du copolymère, dans lequel les motifs d'acrylate polyfonctionnels sont présents en quantité de 0,5 à 2 % en poids.

4. Procédé suivant les revendications 1—3 pour la production du copolymère, dans lequel les motifs des comonomères fonctionnels sont présents en une quantité de 5 à 20 % en poids.

9

5. Procédé suivant les revendications 1—4 pour la production du copolymère dans lequel le motif du comonomère fonctionnel appartient à l'un des monomères acide acrylique, acide méthacrylique, acrylate d'hydroxyéthyle, méthacrylate d'hydroxyéthyle, acrylate d'hydroxypropyle, méthacrylate d'hydroxypropyle et leurs mélanges.

6. Procédé suivant les revendications 1—5 pour la production du copolymère dans lequel les motifs d'autres monomères à non-saturation éthylénique représentant le composant (d) sont présents en une quantité de 5 à 60 % en poids.

7. Composition de revêtement, formée:

(1) d'un copolymère suivant les revendications 1 à 6 et

(2) d'un agent convenable de réticulation.

8. Composition de revêtement suivant la revendication 7, dans laquelle l'agent de réticulation est un polyépoxyde ou une résine amine-formaldéhyde à fonction éther.

9. Composition de revêtement suivant la revendication 8, dans laquelle le polyépoxyde est un époxyde cycloaliphatique ou un époxyde de diglycidyle.